Europäisches Patentamt

European Patent Office

Office européen des brevets

(11) Publication number: **0 182 452**
**A1**

# EUROPEAN PATENT APPLICATION

(21) Application number: 85303429.6

(22) Date of filing: 15.05.85

(51) Int. Cl.⁴: **G 01 V 1/22, H 04 B 7/005**

(30) Priority: 23.11.84 US 674258

(43) Date of publication of application: 28.05.86
Bulletin 86/22

(84) Designated Contracting States: BE CH DE FR GB IT LI
NL SE

(71) Applicant: WESTERN GEOPHYSICAL COMPANY OF
AMERICA, P.O.BOX 2469, Houston TEXAS 77252 (US)

(72) Inventor: Thigpen, Ben B., 13914 Kimberley Lane,
Houston Texas, 77029 (US)
Inventor: Scott, Gary, 13723 Larkway, Sugarland
Texas, 77478 (US)
Inventor: Yarbrough, Mack, 10411 Skyhawk, Houston
Texas, 77064 (US)

(74) Representative: Godsill, John Kenneth et al, Haseltine
Lake & Co. Hazlitt House 28 Southampton Buildings
Chancery Lane, London WC2A 1AT (GB)

(54) **RF telemetric system.**

(57) A telemetric data-gathering system includes a mobile central station (12) and a plurality of areally distributed seismic data acquisition units (10) such as sonobuoys. Upon command from the central station (12), FM radio transceivers in the buoys (10) transmit seismic data back to the central station (12). The transmitter gain (38) of the transceivers (20) for each buoy (10) is scaled in inverse relation to the proximity of that buoy (10) to the central station 12.

-1-

## RF Telemetric System

This invention is involved with a means for balancing the signal strengths of RF telemetric data transmissions of seismic data from near transmitters with respect to remote transmitters.

In the process of seismic exploration of the earth for useful minerals in the earth, a series of seismic sensors are laid out along a line or area of survey. At intervals, a sound source generates sonic waves which radiate outwardly and downwardly. The seismic waves are reflected from underground earth layers, return to the surface and are detected by the seismic sensors. The elapsed time between triggering of the sound source and the arrival of the reflected waves from the respective earth layers is a measure of the depths to those layers.

Signals detected by the sensors may be delivered to a central signal utilization device over wire lines, by radio transmissions, over coaxial cables, or through optical fibers at the choice of the operator. The type of signal transmission and the design of the seismic sensor package depends a lot on the environmental conditions expected. In shallow water, in the surf zones of the seas, and in the transitional wetlands bordering bodies of water, telemetric systems employing FM radio transmissions are preferred because of the difficulty of stringing wire lines in such areas. A further advantage of an FM system is the relative immunity of FM signals from atmospheric noise.

Seismic operations may be conducted by surveying along a single line (2-D) or by surveying an entire swath of lines (3-D) to provide data gathering in three dimensions during the same pass. This invention, later to be described in detail, is particularly adapted for use in shallow-water coastal transition zones in connection with 3-D operations.

A standard technique in shallow water and coastal transition zones is the use of instrumented buoys. To each buoy there is coupled one or more seismic sensors which may be hydrophones or geophones. Inside the buoy case are battery-powered electronics for accepting and processing the received analog signals as digital output signals. An FM transmitter is provided to transmit the digitally encoded seismic signals to a central signal-utilization station aboard a mother ship or other vehicle.

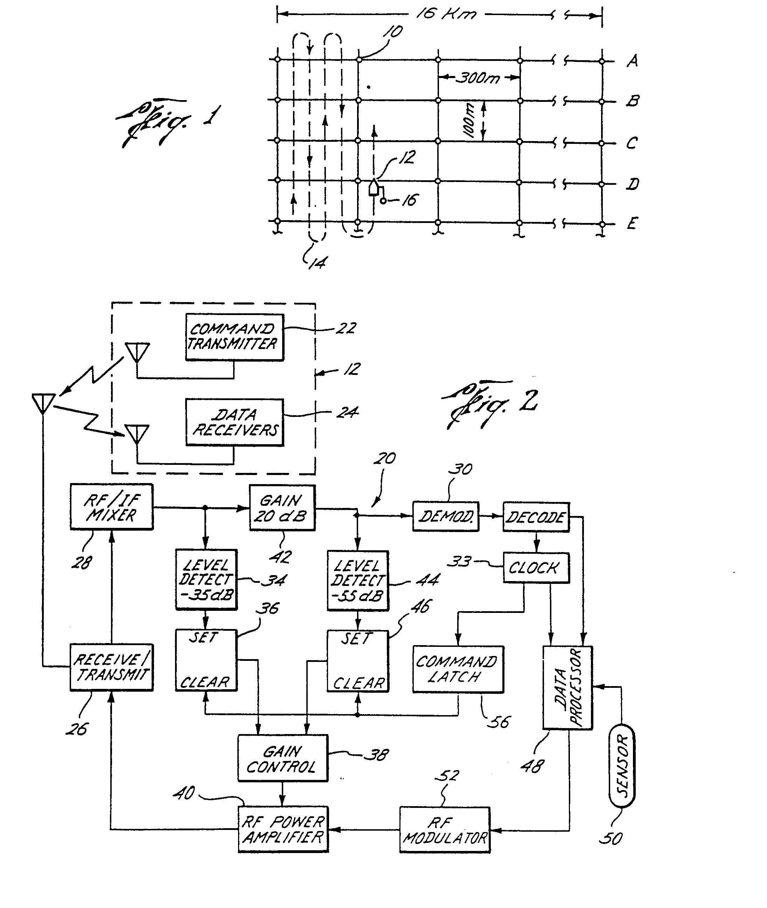

In 3-D operations, a grid of seismic buoys 10, shown by small circles, is laid out as shown in Figure 1. The buoys are distributed about 300 meters apart along a plurality of lines A-E that are themselves about 100 meters apart. Each buoy is tuned to transmit data over an allotted RF band, such as the 72-76 MHz band, through FM channels spaced 7.5-35 kHz apart. Thus there may be available 100-500 separate telemetric channels to accomodate an equal number of seismic buoys. In operation, a ship 12 or other vehicle travels along a course such as indicated by sinuous dashed line 14. At selected intervals, the ship triggers a sound source 16 to generate seismic waves which are received by the buoys. Upon receipt of the seismic signals the seismic signals are radioed back to ship 10 in real time.

The dimensions of the total buoy grid may extend for 15-20 Km. The attenuation of the radio signal from the most remote buoys relative to the buoys nearer to the ship may amount to 40-60 dB, which requires maximum transmitter gain for the remote buoys. But if all the buoys are set to maximum gain, the signals from the nearer buoys crossfeed into adjacent channels and overload the receiver RF amplifiers preventing the acquisition of signal-lock on the far buoys by the receivers.

The ship is constantly moving at a velocity of 4 to 6 knots as it zig-zags its way through the buoy grid. It is totally impractical to send a small pilot boat ahead of the ship to turn down the transmitter gain of the nearer buoys as the ship approaches. Further, th＾ acoustical noise such as a vessel would create would be impossible to tolerate.

It is therefore an object of this invention to cause the buoy transmitters to compensate their transmitter power in inverse relation to the proximity of the mother ship or other vehicle.

In a preferred embodiment of this invention, a mother ship transmits an arm signal over a telemetric radio link to a plurality of seismic data acquisition units, having radio transceivers, the units being arranged in a preselected areal pattern. When the data acquisition units receive an arm signal, the power level of the received arm signal is measured. Each data acquisition unit scales its transmitter power output in inverse relation to the received arm-signal strength, thereby eliminating interchannel crossfeed due to nearby transmitter units.

Preferably the data-acquisition-unit transmitter gain is adjusted stepwise in inverse proportion to the proximity of a mother ship.

Preferably the data acquisition unit transceiver is provided with a first level detector. If the interrogation signal level received from the mother ship by the data acquisition unit is less than 35 dB down from one watt (W), the transmitter output gain is scaled to 100 microwatts. If the received signal level lies between -35 dB and -55dB, the transmitter output gain is scaled to 100 mW. If the received interrogation signal level is greater than 55 dB down from one watt, the transmitter output power is increased to full power of one watt.

A better understanding of the benefits and advantages of my invention may be obtained from the appended detailed description and the drawings, wherein:

Figure 1 is an illustration of a typical areal grid employing remotely-distributed data acquistion units;

Figure 2 is a simplified block diagram of the transceiver circuitry employed in a data acquisition unit.

A general discussion of one type of 3-D seismic surveying was outlined earlier in connection with Figure 1. The basic technique can be practiced at sea by use of such data acquisition units (DAU) as buoys, across the coastal transition zone to the beach by placing the buoys on suitable stands, or completely on land by use of man-portable DAU modules. At sea of course one would operate from a mother ship. In the transition zone, one could operate from a mother ship, an amphibious vehicle, or from a land vehicle, such as a truck, or from a combination of two or more in a coordinated operation.

The central station, be it ship-mounted or truck-mounted, includes a master FM transmitter and a plurality of FM receivers as well as a multichannel signal utilization device and archival storage facilities. Each data acquisition unit contains a battery-operated transceiver as earlier discussed. For convenience, but not by way of limitation, we shall talk in terms of ships and buoys.

Normally, the buoys 10 are dormant. At intervals, the mother ship 12, when ready to trigger sound source 16, broadcasts an arm signal by radio from command unit 22.

Each seismic buoy 10 detects the arm signal and in response thereto assumes an active state whereupon it measures the signal level of the received arm signal. The gain of the buoy transmitter is preset in inverse relation to the received signal level. That inverse relation may be an inverse linear proportion, logarithmic proportion, an approximation thereof, or any other relationship that will prevent the overloading of receivers on the central station.

When the sound source 16 is triggered, a command signal sets the buoys 1( to the transmit mode. The seismic signals received by the sensors coupled to buoys 10, are transmitted back to the mother ship 12 via the radio link. The buoys then revert back to the dormant-receive state to conserve battery power.

Figure 2 is a block diagram of the transceiver circuitry 20, mounted in the buoys with particular emphasis on the gain-control aspect. Circuitry details that are conventional to FM transceivers and sonobuoys in general and that are not germane to this invention, have been omitted to minimize complexity of the drawing.

Aboard ship 12 are an arm/command transmitter 22 and a plurality of data receivers 24, equal in number to the number of buoys 10 that make up the seismic grid of Figure 1. Each buoy transmitter is tuned to a different frequency within the 72-76 MHz band. The frequency separation may be 7.5 to 35kHz. Every buoy receiver is tuned to the command transmitter frequency.

When inactive, the transceiver module 20 in each of the buoys is set by receive/transmit relay 26 to a low-power receive mode. All latches are cleared and the transmitter section is asleep. Upon command from command transmitter 22, an arm signal is broadcast to the buoys.

The signal is received by the receiver section of the transceiver module 20, passed through the usual IF stage 28 to demodulator 30. The demodulated command is decoded at decoder 32 and the system thereupon awakens, awaiting a command to transmit data.

The arm signal also passes to first level-detector 34 having a first threshold level of -35 dB. Here the received arm-signal level is determined. If the signal level is greater than -35 dB (i.e., 0 to -35 dB) referred to 1 watt, latch 36 is set and gain control 38 presets the transmitter output level to 100 microwatts in RF power amplifier 40.

If the arm-s'gnal power level is less than the first threshold level of -35 dB referred to one watt (i.e. between -35 and -55 dB) latch 36 is not set. The signal passes through a fixed-gain amplifier 42 having a gain of 20 dB. Second-level detector 44 having a second threshold level of -55 dB determines the arm-signal strength. If the power level of the received signal lies between -35 and -55 dB relative to one watt, latch 46 is set and gain control 38 presets the transmitter output level to 100 milliwatts in RF power amplifier 40.

Finally, if the received arm-signal level is so low, that is, less than the second threshold level, that neither of latches 36 or 46 are set, a default circuit in gain control 38 presets the transmitter output power level to full power of one watt at power amplifier 40.

Following the arm signal, a command signal is broadcast. The command signal is decoded to cause data processor 48 to accept, process, digitize and encode for transmission the seismic signals from seismic sensor array 50. The command signal also starts a clock 33 to define the length of the desired data-recording period. The digitized encoded seismic signals modulate the RF carrier at RF modulator 52. The modulated carrier is passed on through power amplifier 40 at the output power-level selected by gain control 38. At the same time, receive/transmit relay 26 is set to the transmit mode so that the seismic data signals may be transmitted back to the data receivers 24 on ship 12.

At the end of the data acquisition phase, clock 33 times out, terminates data acquisition and returns the transceiver module 20 to dormancy. At this point clock 33 causes command latch 56 to clear latches 36 and 46. The receive/transmit relay 26 is set to the receive mode.

This invention has been described in terms of a marine system employing buoys as the data acquisition units bu' the invention applies equally well to any sort of remote, distributed, real-time data-gathering system that employs a telemetric link that is inherently non uniform in strength.

For illustrative purposes, my invention has been described with a certain degree of specificity. Variations will occur to those skilled in the art but which may be included within the scope and spirit of this invention which is limited only by the appended claims.

- 8 -

CLAIMS:

1. An RF seismic telemetric data-gathering system including a mobile central station (12) and a plurality of areally distributed seismic data acquisition units (10), characterised by: means (22) in said central station (12) for transmitting an RF arm signal to said seismic data acquisition units (10) to initiate a data acquisition cycle; transmission means (26) in each of said seismic data acquisition units for receiving said arm signal and for transmitting seismic data signals to said central station (12) in response to said arm signal; and gain adjustment means (34,44,38) in each said seismic data acquisition unit (10) for adjusting the gain of signal amplifying means (40) in each said seismic data acquisition unit in inverse relation to the proximity of said central station (12) to the respective seismic data acquisition units (10).

2. A system as claimed in claim 1, wherein said gain adjustment means (34,44,38) is characterised by: means (34), (44) for measuring the strength of the received arm signal; and means (38) for stepwise adjusting the gain of the transmission means (26) in inverse relation to the measured strength of said received arm signal.

3. A system as claimed in claim 2, wherein said means (34,44) for measuring comprises first and second signal level detectors (34,44) having first and second threshold levels; and first and second latches (36,46) coupled respectively to said first and second level detectors (34, 44) and wherein the transmitter gain control means (38) is coupled to said first and second latches (36,46); the gain adjustment means comprising means (28) for presenting the received arm signal to said first level detector (34) for setting said first latch (36) to cause said gain control (38) to set the signal amplifying means (40) to a low gain when the arm signal level exceeds said first threshold level; means (42) for presenting the received arm signal to said second level detector (44) when the level of said arm signal is less than said first threshold but greater than said second threshold level for setting said second latch (46) to cause said gain control (38) to set the signal amplifying means (40) to an intermediate gain while the arm signal level remains between said first and second threshold levels; and means in said gain control (38) to set the signal amplifying means (40) to a high gain when said arm signal level falls below said second threshold level.

4.    A system as claimed in claim 3 characterised in that: said first threshold level is -35 dB relative to one watt, and that said second threshold level is -55dB relative to one watt.

5.    A system as claimed in claim 3 or 4, characterised by: means (56) for resetting said latches (36,46) at the termination of a data acquisition cycle; and means (33) within each said data acquisition unit (10) for terminating such data acquisition cycle.

6.    A telemetric system including a command unit (22) and a plurality of data acquisition units (10) characterised by: means (26) associated with each data acquisition unit (10) for sensing an arming signal transmitted by the command unit (22); means (26) within each data acquisition unit (10) for transmitting data to a central station (12); and means (38) within each data acquisition unit (10) for adjusting the level at which that acquisition unit (10) transmits data in response to the arming signal sensed by that acquisition unit.

7.    A system as claimed in claim 6 characterised in that the level at which each data acquisition unit (10) transmits data is in inverse relation to the arming signal sensed by that unit (10).

8.    A system as claimed in claim 7 characterised in that said inverse relation is in inverse linear

-10-

proportion.

9.     A system as claimed in claim 7 characterised in that said inverse relation is in inverse logarithmic proportion.

_Fig. 1_

_Fig. 2_

## European Patent Office

## EUROPEAN SEARCH REPORT

Application number

EP 85 30 3429

### DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| Y | US-A-3 151 295 (HAVILAND) * Column 2, lines 42-61; column 7, lines 30-51; figures 3-5 * | 1,6-8 | G 01 V 1/22 H 04 B 7/005 |
| Y | US-A-3 325 778 (BALLARD) * Abstract; figures 1,2 * | 1,6-8 | |
| A | PATENTS ABSTRACTS OF JAPAN, vol. 7, no. 27 (E-156) [1172], 3th February 1983; & JP - A - 57 181 235 (ZENERARU K.K.) 08-11-1982 | 2,3 | |
| A | PATENTS ABSTRACTS OF JAPAN, vol. 7, no. 174 (E-190) [1319], 2nd August 1983; & JP - A - 58 81 343 (KEISATSUCHIYOU) 16-05-1983 | 1 | |
| | | | TECHNICAL FIELDS SEARCHED (Int. Cl.4) |
| A | PATENTS ABSTRACTS OF JAPAN, vol. 8, no. 88 (E-240) [1525], 21st April 1984; & JP - A - 59 6636 (NIPPON DENKI K.K.) 13-01-1984 | 1 | H 04 B G 01 V |

The present search report has been drawn up for all claims

| Place of search | Date of completion of the search | Examiner |
|---|---|---|
| THE HAGUE | 19-09-1985 | ANDERSON A.TH. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82